(19) **Europäisches Patentamt / European Patent Office / Office européen des brevets**

(11) **EP 4 492 036 A1**

(12) **EUROPEAN PATENT APPLICATION**
published in accordance with Art. 153(4) EPC

(43) Date of publication:
**15.01.2025 Bulletin 2025/03**

(21) Application number: **23766902.3**

(22) Date of filing: **08.03.2023**

(51) International Patent Classification (IPC):
**G01N 3/303** (2006.01)     **G01N 23/041** (2018.01)
**G01N 23/18** (2018.01)     **G01N 23/201** (2018.01)

(52) Cooperative Patent Classification (CPC):
**G01N 3/303; G01N 23/041; G01N 23/18;**
**G01N 23/201**

(86) International application number:
**PCT/JP2023/008907**

(87) International publication number:
**WO 2023/171726 (14.09.2023 Gazette 2023/37)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **10.03.2022 JP 2022036931**

(71) Applicant: **KONICA MINOLTA, INC.**
**Tokyo 100-7015 (JP)**

(72) Inventors:
 • **HASHIMOTO, Shota**
  **Tokyo 100-7015 (JP)**
 • **NANJIYOU, Takashi**
  **Tokyo 100-7015 (JP)**
 • **ITO, Yasutoshi**
  **Tokyo 100-7015 (JP)**
 • **NAKAE, Hazuki**
  **Tokyo 100-7015 (JP)**
 • **KOIDE, Takuya**
  **Tokyo 100-7015 (JP)**

(74) Representative: **Gille Hrabal**
**Partnerschaftsgesellschaft mbB**
**Patentanwälte**
**Brucknerstraße 20**
**40593 Düsseldorf (DE)**

(54) **EVALUATION METHOD, EVALUATION DEVICE, AND PROGRAM**

(57)     Provided is a method for quantitatively evaluating the entirety of a defective part in a brittle material that has high transmittance and the defective part. This evaluation method uses a Talbot imaging device (a radiation imaging device 100), wherein an object to be evaluated H in the evaluation is a brittle material that has a defective part and a high transmittance (I/Io) of an electromagnetic wave including light, and the method involves: acquiring a small angle scattering image by imaging the object to be evaluated H; acquiring a scattering signal intensity of the defective part from the small angle scattering image; and calculating information in a depth direction of the depth part from the scattering signal intensity.

FIG.1

## Description

Technical Field

The present invention relates to an evaluation method, an evaluation apparatus, and a program.

Background Art

Glass is a typical brittle material and has excellent transparency, chemical resistance, and heat resistance. Thus, glass is suitable for applications where defined chemical and physical properties are important. Examples of such applications include displays, various sensors, solar cells, and micromechanical parts.

Recently, there has been a demand for further improvement in quality of glass, and a thinner and lighter glass substrate having high strength and flexibility has been awaited.

Ultra-thin glass (UTG) has been developed as a cover glass and display for devices such as smart phones, tablets, watches and other wearable devices due to its flexibility. The UTG can also be used as a cover glass of a fingerprint sensor module and a lens cover of a camera.

However, a glass sheet that is less than 0.5 mm thick like UTG tends to have defects that mainly result in breakage, such as cracks and chipping at the glass edge. Handling of such a glass sheet is tremendously difficult. Also, a thinner glass sheet results in a significant decrease of the overall mechanical strength (i.e., bending or impact strength).

Therefore, it is very important to estimate the strength of a thin glass and to estimate whether the thin glass product can be used for a particular application. To evaluate the mechanical properties of ultrathin glass, many tests have been developed. Specific examples of the tests include a three-point bending (3BP) test, a pen drop test, and a scratch resistance test.

In a known pen drop test, a pen is dropped to hit a glass, and it is determined whether the glass is broken or not, based on qualitative evaluation by visual observation. According to the visual evaluation, it is possible to confirm that the glass is broken, but it is not possible to determine to what extent the glass is broken in the thickness direction. That is, in a case where the glass is used for a protective cover, it is not possible to determine whether the damage has reached the product to be protected.

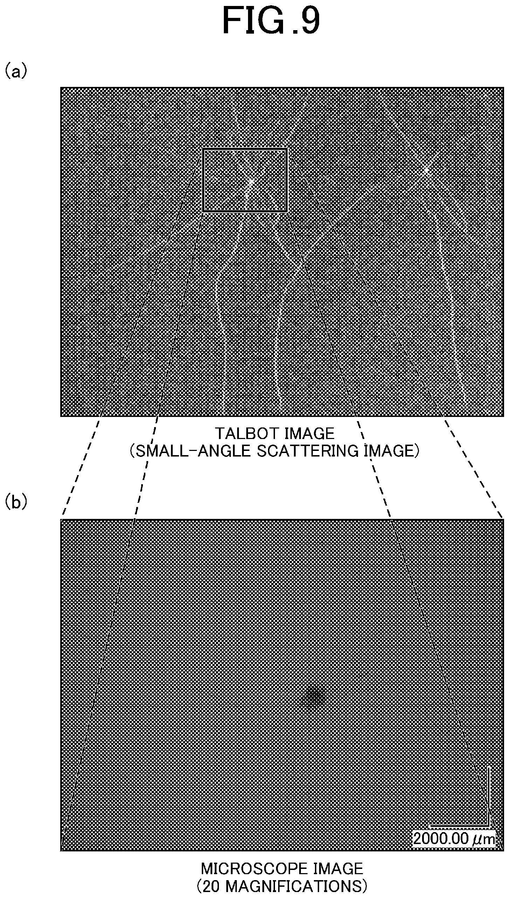

When an optical system, such as a white light interferometer or a laser microscope, is used, a field of view is narrowed in a high magnification observation, as shown in FIG. 9(b) as an example. There is no method for comprehensively and quantitatively evaluating the entire crack other than visual observation.

As a method for comprehensively evaluating such cracks, Patent Document 1 discloses a method for visualizing a two-dimensional size of a cracks and a void and distribution of cracks and voids generated inside a test piece made of resin and CFRP (Carbon Fiber Reinforced Plastics) by a tensile test, by using a small-angle scattering image and a differential phase image generated by X-ray Talbot imaging.

Citation list

Patent Literature

Patent literature 1: Japanese Unexamined Patent Publication No. 2020-187088

Summary of Invention

Technical Problem

However, although the method of Patent Document 1 can clarify the two-dimensional size and in-plane distribution of cracks and voids, these are all limited to two-dimensional information. That is, it is not possible to quantitatively learn depth-direction information of the crack (to what extent the sample is cracked in the thickness direction) only by generating the small-angle scattering image and the differential phase image and visualizing the entire crack generated in the sample, as disclosed in Patent Document 1.

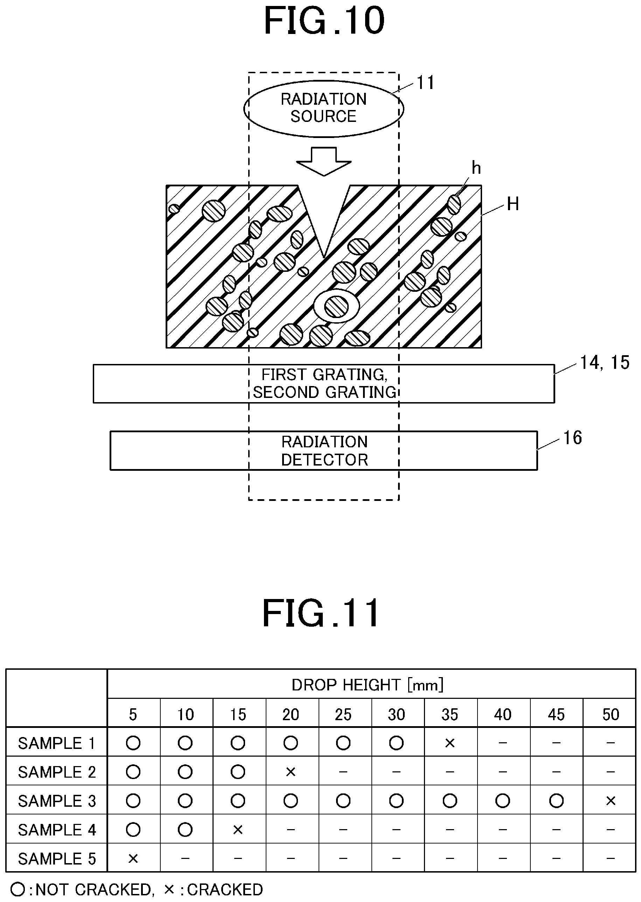

More specifically, according to the invention described in Patent Document 1, when the sample is a fiber-oriented resin such as CFRP, X-rays are scattered not only at the position of the generated crack but also at a fiber portion h in the evaluation target H, as shown in FIG. 10. Since the Talbot imaging generates a small-angle scattering image by integrating the scattering signal intensity in the X-ray radiation axis direction, it is not possible to extract the scattering signal of the crack portion only. It is therefore not possible to calculate the depth of the crack, based on the signal intensity of the small-angle scattering image.

The same applies to the differential phase image, in which the signal intensity changes according to the refraction of the X-rays. In a fiber-oriented resin such as CFRP, X-rays are refracted not only at the position of a generated crack but also at the fiber portion h of the evaluation target H, as shown in FIG. 10. Therefore, it is not possible to extract the signal of the crack portion only and to calculate the depth of the crack, based on the signal intensity of the differential phase image.

An object of the present invention is to provide an evaluation method, an evaluation apparatus, and a program that allow quantitative evaluation of the entire defect part in a brittle material having a high transmittance.

Solution to Problem

In order to solve the above-described problem, according to the present invention, there is provided a evaluation method using a Talbot imaging apparatus, herein in the evaluation, an evaluation target is a brittle material having a high transmittance (I/Io) of an electromagnetic wave including light and having a defect part, the method including: imaging the evaluation target to obtain a small-angle scattering image; obtaining a scattering signal intensity of the defect part from the small-angle scattering image; and calculating depth-direction information of the defect part from the scattering signal intensity.

Furthermore, according to the present invention, there is provided an evaluation method using a Talbot imaging apparatus, wherein in the evaluation, an evaluation target is a brittle material having a high transmittance (I/Io) of an electromagnetic wave including light and having a defect part, the method including: imaging the evaluation target to obtain a small-angle scattering image; obtaining a scattering signal intensity of the defect part from the small-angle scattering image; and calculating depth-direction information of the defect part from the scattering signal intensity.

Furthermore, according to the present invention, there is provided an evaluation apparatus including: an irradiation device that emits an electromagnetic wave including light; gratings; a detector; a generation means; and a calculation means, wherein the irradiation device, the gratings, and the detector are arranged in an irradiation axis direction, wherein an evaluation target is a brittle material that has a high transmittance (I/Io) of the electromagnetic wave and that has a defect part, and the evaluation target is placed at a position overlapping the irradiation axis direction, wherein the irradiation device irradiates the evaluation target to image the evaluation target and obtain a moire fringe image, wherein the generation means generates a small-angle scattering image, based on the obtained moire fringe image, wherein the calculation means obtains a scattering signal intensity of the defect part from the small-angle scattering image and calculates depth-direction information of the defect part from the scattering signal intensity.

Furthermore, according to the present invention, there is provided a program for a computer of an evaluation apparatus that includes an irradiation device for emitting an electromagnetic wave including light, gratings, and a detector, wherein the irradiation device, the gratings, and the detector are arranged in an irradiation axis direction, wherein an evaluation target is a brittle material that has a high transmittance (I/Io) of the electromagnetic wave and has a defect part, and the evaluation target is placed at a position overlapping the irradiation axis direction, wherein the irradiation device irradiates the evaluation target to image the evaluation target and obtain a moire fringe image, wherein the evaluation apparatus evaluates the evaluation target, based on the obtained moire fringe image, wherein the program causes the computer to function as: a generation means that generates a small-angle scattering image, based on the moire fringe image, and a calculation means that obtains a scattering signal intensity of the defect part from the small-angle scattering image and calculates depth-direction information of the defect part from the scattering signal intensity.

Advantageous Effects of Invention

According to the present invention, the entire defect part in a brittle material having a high transmittance can be quantitatively evaluated.

Brief Description of Drawings

[FIG. 1] This is a diagram illustrating a configuration example of a radiography apparatus.
[FIG. 2] This is a plan view of a multi slit.
[FIG. 3] This is a block diagram illustrating a functional configuration of a controller.
[FIG. 4] This is a diagram illustrating the principle of a Talbot interferometer.
[FIG. 5] This is a flowchart illustrating a crack depth calculation process.
[FIG. 6] This is a schematic diagram of an evaluation target and a radiography apparatus when viewed from a lateral side.
[FIG. 7] This is a diagram illustrating a result of an impact resistance performance test.
[FIG. 8] This is a diagram illustrating an example of the configuration of a radiography apparatus.
[FIG. 9] This is a diagram illustrating a UTG after a pen drop test.
[FIG. 10] This is a schematic diagram of a known evaluation target and a known radiography apparatus as viewed from a lateral side.
[FIG. 11] This shows a result of a known pen drop test.

Description of Embodiments

Hereinafter, embodiments of the present invention will be described with reference to the drawings.

[First Embodiment]

(Configuration of radiography system)

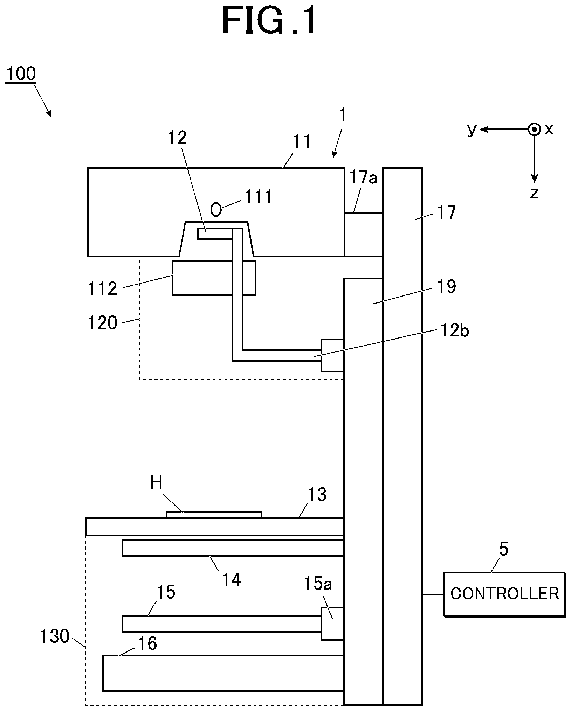

FIG. 1 is a schematic diagram of a radiography apparatus 100 according to a first embodiment of the present invention.

The radiography apparatus 100 is an apparatus that images an evaluation target H, such as a test piece on which a pen drop test was performed. The radiography apparatus 100 functions as a Talbot imaging apparatus and an evaluation apparatus.

As illustrated in FIG. 1, the radiography apparatus 100 includes a main body 1 and a controller 5.

As illustrated in FIG. 1, the main body 1 includes a Talbot-Lau interferometer that includes: a first cover unit 120 including a radiation source 11, a multi-slit 12, and an additional filter-collimator 112; a second cover unit 130 including a support base 13, a first grating 14, a second grating 15, and a radiation detector 16; a support column 17; and a base stand 19. The Talbot-Lau interferometer of the main body 1 is a vertical type, and the radiation source 11, the multi-slit 12, the support base 13, the first grating 14, the second grating 15, and the radiation detector 16 are arranged in this order in the z direction that is the gravity direction.

The multi-slit 12, the support base 13, the first grating 14, the second grating 15, and the radiation detector 16 are supported by the same base stand 19 and attached to the support column 17. The base stand 19 may be configured to be movable in the z-direction with respect to the support column 17.

In addition to the base stand 19, the radiation source 11 is attached to the support column 17. The radiation source 11 is supported by the support column 17 via the buffer member 17a. The buffer member 17a may be made of any material that can absorb impact and vibration, such as elastomer. Since the radiation source 11 generates heat by emitting radiation, it is preferable that the buffer member 17a on the radiation source 11 side be made of a material having an insulation property in addition to the impact absorption property.

The radiation source 11 includes an X-ray tube, generates X-rays with the X-ray tube, and emits the X-rays in the z direction (the gravity direction). As the X-ray tube, a Coolidge X-ray tube or a rotating anode X-ray tube can be used, for example. As the anode, tungsten or molybdenum can be used.

The focal diameter of the radiation source 11 is preferably 0.03 to 3 (mm), and more preferably 0.1 to 1 (mm).

Although X-rays are used in imaging as an example in the present embodiment, other radiation may be used. For example, neutron rays, gamma rays, or electromagnetic waves including light may be used. That is, in the present embodiment, radiation means radiation in a broad sense and refers to all electromagnetic waves and particle beams.

The radiation source 11 functions as an irradiation device.

The first cover unit 120 is provided immediately below the radiation source 11. As illustrated in FIG. 1, the first cover unit 120 includes the multi-slit 12, an attachment arm 12b, and the additional filter-collimator 112. The constituent elements of the first cover unit 120 are covered and protected by a cover member.

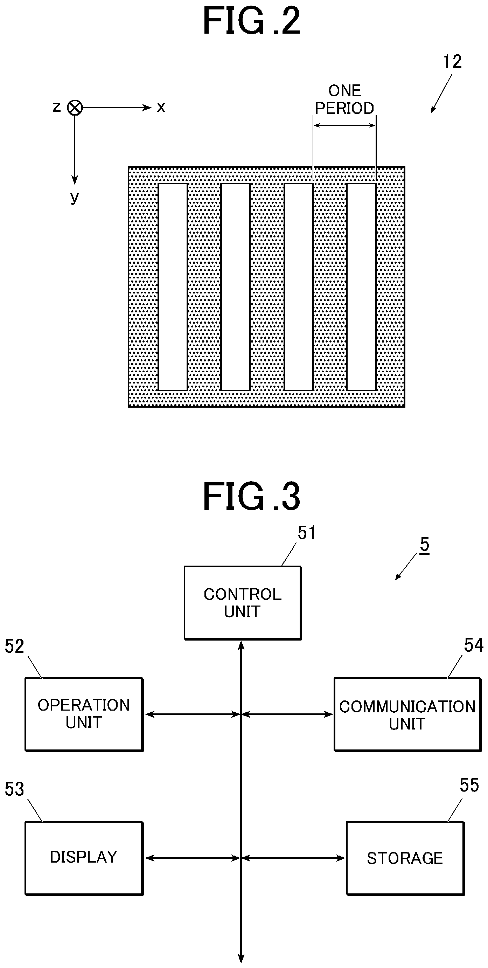

The multi-slit 12 (G0 grating) is a diffraction grating. As illustrated in FIG. 2, in the multi-slit 12, multiple slits are formed at predetermined intervals in the x direction, which is orthogonal to the irradiation axis direction (here, the z direction). The multi-slit 12 is made of a material having a high radiation absorption rate (i.e.,

having a high radiation shielding property), such as tungsten, lead, and gold, on a substrate made of a material having a low radiation absorption rate, such as silicon and glass. For example, a resist layer is masked in a slit shape by photolithography, and UV is applied to transfer the slit pattern to the resist layer. By exposure, a slit structure having the same shape as the slit pattern is obtained, and a metal is filled between the slit structures by an electroforming method. Thus, the multi-slit 12 is formed.

The slit period (grating period) of the multi-slit 12 is 1 to 60 $\mu$m. One slit period is the distance between adjacent slits, as illustrated in FIG. 2. The width of the slit (the length of each slit in the slit period direction (x direction)) is the length of 1 to 60 % of the slit period, and more preferably 10 to 40 %. The height of the slits (the height in the z direction) is 1 to 1500 $\mu$m, and preferably 30 to 1000 $\mu$m. The multi-slit 12 is supported by the attachment arm 12b and is attached to the base stand 19.

The additional filter-collimator 112 limits the irradiation region of the X-rays emitted by the radiation source 11 and removes low-energy components that do not contribute to imaging from the X-rays emitted by the radiation source 11.

As shown in FIG. 1, the second cover unit 130 includes the support base 13, the first grating 14, the second grating 15, a moving mechanism 15a, and a radiation detector 16. The top surface of the second cover unit 130 serves as the support base 13. The side of the support base 13 is covered with a cover member so that the internal constituent elements are protected from damage caused by the contact with the evaluation target H or the engineer or from entry of dust. Since the temperature in the unit is less likely to be affected by the outside air, it is possible to reduce a change in the grating position of the first grating 14 and the second grating 15, which is caused by thermal expansion or the like.

The support base 13 is a base for supporting the evaluation target H.

As with the multi-slit 12, the first grating 14 (G1 grating) is a diffraction grating in which multiple slits are formed in the x direction, which is orthogonal to the z direction as the irradiation axis direction. The first grating 14 can be formed by photolithography using UV as with the multi-slit 12, or the grating structure of the first grating 14 may be made of only silicon by a so-called ICP method, by performing deep carving processing on a silicon substrate with fine wires. The slit period of the first grating 14 is 1 to 20 ($\mu$m). The width of the slits is 20 to 70 (%) of the slit period and preferably 35 to 60 (%) of the slit period. The height of the slits is 1 to 100 ($\mu$m).

As with the multi-slit 12, the second grating 15 (G2 grating) is a diffractive grating in which multiple slits are formed in the x direction, which is orthogonal to the z direction as the irradiation axis direction. The second grating 15 can also be formed by photolithography. The slit period of the second grating 15 is 1 to 20 ($\mu$m). The width of the slits is 30 to 70 (%) of the slit period and preferably 35 to 60 (%) of the slit period. The height of the slits is 1 to 100 (μm). The moving mechanism 15a is provided adjacent to the second grating 15 to move the second grating 15 in the x direction. The moving mechanism 15a may have any configuration as long as the movement mechanism 15a can linearly move the second grating 15 in the x direction by driving a motor or the like.

In the radiation detector 16, conversion elements that generate electric signals corresponding to the received radiation are two-dimensionally arranged, and the electric signals generated by the conversion elements are read as image signals. The pixel size of the radiation detector 16 is 10 to 300 (μm), or more preferably, 50 to 200 (μm). It is preferable that the position of the radiation detector 16 be fixed on the base stand 19 so as to abut the second grating 15. This is because the greater the distance between the second grating 15 and the radiation detector 16 is, the more blurry a moire fringe image obtained by the radiation detector 16 becomes.

As the radiation detector 16, an FPD (Flat Panel Detector) can be used. There are an FPD of an indirect conversion type in which radiation is converted into electrical signals by photoelectric conversion elements via a scintillator and an FPD of a direct conversion type in which radiation is directly converted into electrical signals. Either type may be used.

As the radiation detector 16, a radiation detector to which the intensity modulation effect of the second grating 15 is applied may be used. For example, a slit-scintillator detector may be used as the radiation detector 16. The slit-scintillator detector is a grading-shaped scintillator that is obtained by forming grooves in a scintillator to provide the scintillator with dead zones having the same periods and widths as the slits of the second grating 15 (reference document 1: Simon Rutishauser et al., "Structured scintillator for hard x-ray grating interferometry", APPLIED PHYSICS LETTERS 98, 171107 (2011)). Since the radiation detector 16 having such a configuration serves as both the second grating 15 and the radiation detector 16, it is not necessary to separately provide the second grating 15. That is, providing the slit scintillator detector is equivalent to providing the second grating 15 and the radiation detector 16.

Although the Talbot-Lau interferometer of the main body 1 is a so-called vertical type that emits X-rays from the radiation source 11 provided on the upper side toward the evaluation target H placed on the lower side, the Talbot-Lau interferometer is not limited thereto. The Talbot-Lau interferometer may be configured to emit X-rays from the radiation source 11 provided on the lower side toward the evaluation target H placed on the upper side. The Talbot-Lau interferometer can also be configured to emit X-rays in any direction, such as in a horizontal direction (a so-called horizontal type).

As illustrated in FIG. 3, the controller 5 includes a control unit 51, an operation unit 52, a display 53, a communication unit 54, and a storage 55.

The control unit 51 includes a CPU (central processing unit) and a RAM (random access memory). The control unit 51 is connected to the components of the main body 1 (e.g., the radiation source 11, the radiation detector 16, and the moving mechanism 15a) and controls the operation of the components. Furthermore, the control unit 51 performs various kinds of processes including a crack depth calculation process A, which is described later, in cooperation with programs stored in the storage 55.

That is, the control unit 51 functions as a generation means that generates a small-angle scattering image, based on moire fringe images, which are described later. Furthermore, the control unit 51 functions as a calculation means that obtains the scattering signal intensity of the defect part, based on the small-angle scattering image and calculates depth-direction information of the defect part, which is described later, based on the scattering signal intensity.

Here, the defect part refers to a defect (a crack or the like) generated in the evaluation target H when external energy is applied to the evaluation target H. The external energy includes both energy applied intentionally and energy applied unintentionally. The former is mainly intended for evaluation tests, and the latter is mainly intended for product tests.

The operation unit 52 includes a touch screen integrally formed with a display of the display 53, an exposure switch, and a group of keys used for inputting imaging conditions and so forth. The operation unit 52 generates operation signals corresponding to the manipulation of these and outputs the operation signals to the control unit 51.

The display 53 displays an operation screen, an operation status of the main body 1, and so forth on the display in accordance with the display control of the control unit 51.

The communication unit 54 includes a communication interface and communicates with an external device over the network.

The storage 55 is constituted of a nonvolatile semiconductor memory, a hard disk, or the like, and stores programs to be executed by the control unit 51 and data necessary for executing the programs.

(Imaging by Talbot interferometer and Talbot-Lau interferometer)

An imaging method by the Talbot interferometer and the Talbot-Lau interferometer is described.

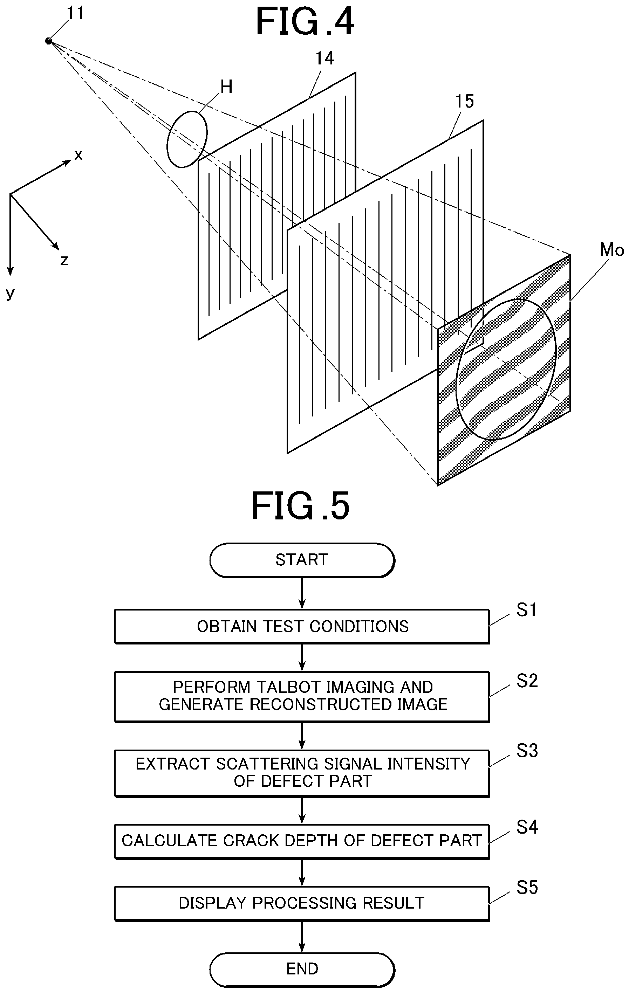

As shown in FIG. 4, when the X-rays emitted by the radiation source 11 are transmitted through the first grating 14, the transmitted X-rays form images at regular intervals in the z-direction. These images are called self-images, and a phenomenon of forming the self-images is called a Talbot effect. The second grating 15 is arranged substantially parallel to the self-image at the position where the self-image is formed, and a moire fringe image (indicated by Mo in FIG. 4) is obtained by the X-rays that have been transmitted by the second grating 15. That is, the first grating 14 forms a periodic pattern, and the second grating 15 converts the periodic pattern into a moire fringe. When the evaluation target H is present between the radiation source 11 and the first grating 14, the phase of the X-rays is shifted by the evaluation target H, and the moire fringes on the moire fringe image are disturbed at the edge of the evaluation target H as a boundary, as shown in FIG. 4. The disturbance of the moire fringes is detected by processing the moire fringe image, and the image of the evaluation target H can be imaged. This is the principle of the Talbot interferometer.

In the main body 1, the multi-slit 12 is arranged at a position close to the radiation source 11 between the radiation source 11 and the first grating 14, and X-ray imaging by the Talbot-Lau interferometer is performed. Although the Talbot interferometer is based on the premise that the radiation source 11 is an ideal point source, the focal point in actual imaging has a focal diameter that is large to some extent. Therefore, the multi-slit 12 provides an effect as if X-rays are emitted from consecutive multiple point sources. This is the X-ray imaging method using the Talbot-Lau interferometer. Even when the focal diameter is large to some extent, the Talbot-Lau interferometer can obtain a Talbot effect like a Talbot effect of the Talbot interferometer.

The main body 1 of the present embodiment obtains moire fringe images, which are necessary for generating a reconstructed image of the evaluation target H, by a fringe scanning method. In general, fringe scanning refers to performing M times of imaging (M-Step imaging) while relatively moving one or two (in the present embodiment, the second grating 15) of the gratings (the multi-slit 12, the first grating 14, and the second grating 15) in the slit period direction (x direction) to obtain M moire fringe images necessary for generating a reconstructed image . M is a positive integer. For an absorption image, M satisfies M > 2. For a differential phase image and a small-angle scattering image, M satisfies M > 3. Specifically, assuming that the slit period of the grating to be moved is d ($\mu$m), imaging is repetitively performed every time the grating is moved in the slit period direction by d/M ($\mu$m). Thus, M moire fringe images are obtained.

The types of the reconstructed image generated based on the moire fringe image include a small-angle scattering image, a differential phase image, and an absorption image.

The small-angle scattering image shows an image of scattering of X-rays in a microstructure, and the signal intensity increases as the scattering of X-rays increases. The small-angle scattering image can show a microstructure aggregate of several $\mu$m to several tens of $\mu$m, which is smaller than the pixel size.

The differential phase image shows an image of X-rays refracted by the evaluation target H, and the signal intensity increases as the refraction of the X-rays increases. In the absorption image, the sensitivity becomes lower for lighter elements, whereas in the differential phase image, the sensitivity can be kept high for lighter elements. Therefore, a change in a substance that may not be captured in the absorption image can be captured in the differential phase image.

The absorption image shows an image of absorption of X-rays by the evaluation target H and is an equivalent to a conventional simple X-ray image.

To generate the reconstructed image, firstly, the moire fringe images of the evaluation target H (the moire fringe image with the evaluation target H) are subjected to offset correction processing, gain correction processing, defective pixel correction processing, X-ray intensity fluctuation correction, and so forth, for example. Next, a reconstructed image is generated, based on the corrected moire fringe images of the evaluation target H and the background (BG) moire fringe images for generating the reconstructed image. The BG moire fringe images are moire fringe images obtained by moving the second grating 15 without the evaluation target H on the support base 13 under the same X-ray irradiation conditions (tube voltage, mAs value, and filter) as the moire fringe images of the evaluation target H.

To generate the absorption image, an added image of the M moire fringe images of the evaluation target H is divided by an added image of the M BG moire fringe images to generate a transmittance image, and the generated transmittance image is logarithmically converted to the absorption image.

To generate the differential phase image, the phases of moire fringes are calculated for the moire fringe images with the evaluation target H and for the BG moire fringe images, based on the principle of the fringe scanning method to generate a differential phase image with the evaluation target H and a differential phase image without the evaluation target H; and the differential phase image without the evaluation target H is subtracted from the generated differential phase image with the evaluation target H.

To generate the small-angle scattering image, the visibility of moire fringes is calculated for the moire fringe images with the evaluation target H and for the BG moire fringe images (visibility = amplitude/average value), based on the principle of the fringe scanning method to generate a small-angle scattering image with the evaluation target H and a small-angle scattering image without the evaluation target H; and the generated small-angle scattering image with the evaluation target H is divided by the small-angle scattering image without the evaluation target H.

(Evaluation target H)

The evaluation target H is a brittle material having a high transmittance (I/Io) of electromagnetic waves including light and having a defect part.

The transmittance (I/Io) of electromagnetic waves including light is defined by the following Expression (1). The transmittance is determined by the ratio I/Io between the incident irradiation energy Io and the irradiation energy I transmitted by a substance.

[Expression 1]

$$I/I_o = exp[-(\mu/\rho)x] \quad \cdots(1)$$

$\mu$: Linear attenuation coefficient
$\rho$: Density of a substance to be irradiated with X-rays
x: Mass thickness of a substance to be irradiated with X-rays

A brittle material refers to a brittle material that may be cracked, chipped, or deformed by various impact tests. Specific examples thereof include: ceramics such as alumina, zirconia, aluminum nitride, mullite, cordierite, alumina/borosilicate glass, cordierite/borosilicate glass, nickel oxide/zirconia, titanium oxide; these ceramic materials to which an oxide of an alkaline earth element, an oxide of a rare earth element, or the like is added; polymer materials such as TAC (tantalum carbide), COP (Cyclo-olefin Polymer), acrylic, polycarbonate, and polyimide; and hard coat materials.

When the transmittance is low, X-rays scatter greatly in parts other than the defect part, and the depth-direction information of the defect part cannot be obtained. Therefore, a high transmittance refers to a transmittance that allows obtainment of the depth-direction information of the defect part.

Specifically, it is preferable that the X-ray transmittance (I/Io) of the evaluation target H be in the range of 0.900 to 0.999 under the imaging condition that the tube voltage is 50 kV and the dose is 800 mAs, for example. However, the X-ray transmittance (I/Io) of the evaluation target H is not necessarily limited to this range.

As the form of a sample in actual imaging, the sample may be a brittle material alone (a glass plate or a green sheet of a dielectric ceramic) or may be a brittle material incorporated in a device (an electronic device in which a brittle material is incorporated as a protective member or a multilayer ceramic capacitor). Specific examples thereof include a single body of ultra-thin glass (UTG), a protective member constituted of an UTG to which a protective film is attached, an electronic device (a smartphone, a tablet, and so forth) that includes an UTG as a protective member, a green sheet of dielectric ceramics (titanium oxide, barium titanate, strontium titanate, and so forth), and a multilayer ceramic capacitor that includes any of these materials as a dielectric layer.

(Operation and evaluation method of Radiography apparatus 100)

Next, operation of the radiography apparatus 100 is described.

FIG. 5 is a flowchart illustrating the crack depth calculation process A that is executed by the control unit 51 of the radiography apparatus 100 in cooperation with a program stored in the storage 55. The crack depth calculation process A is a process to calculate the depth-direction information of the defect part (crack) of the evaluation target H.

Note that the evaluation target H has already been subjected to a pen drop test (e.g., disclosed in Japanese Translation of PCT International Publication 2020-537185) and that the defect part (crack) has been formed by the pen drop in the evaluation target H . Note that a calibration curve, which is described later, has already been stored in the storage 55.

In the present embodiment, M (e.g., four) moire fringe images without the evaluation target H (referred to as BG moire fringe images) are obtained and stored in the storage 55 before starting the crack depth calculation process A. The BG moire fringe images are obtained by performing imaging while moving the second grating 15 in a state where the evaluation target H is not set on the support base 13 or both the evaluation target H and the support base 13 are removed.

The crack depth calculation process A is executed in response to the operation unit 52 receiving an execution instruction. The evaluation target H is set on the support base 13 before Step S2.

First, the control unit 51 obtains test conditions via the operation unit 52 (Step S1). For example, the control unit 51 obtains the height from which the pen is dropped in the pen drop test.

Next, the control unit 51 performs imaging (referred to as Talbot imaging) to obtain moire fringe images using the above-described Talbot effect by controlling the radiation source 11, the moving mechanism 15a, the radiation detector 16, and so forth.. In the present embodiment, M moire fringe images with the evaluation target H (referred to as evaluation target H moire fringe images) are obtained while moving the grating (the second grating 15 in this embodiment) in the slit period direction by the fringe scanning method. Based on the BG fringe moire images, which have been obtained beforehand, and the evaluation target H moire fringe images, the control unit 51 generates a small-angle scattering image as a reconstructed image (Step S2).

Specifically, the small-angle scattering image shown in FIG. 9 (a) is generated.

Next, the control unit 51 extracts the scattering signal intensity of the small-angle scattering image of the defect part (Step S3). Since the defect part is a part and its surrounding on which the pen was dropped in the pen drop test, the defect part is known.

The defect part may be a part where the scattering signal intensity is equal to or greater than a threshold. By determining that a part having a scattering signal intensity equal to or greater than the threshold to be a defect part, a defect part in the evaluation target H can be detected

Next, the control unit 51 calculates the crack depth of the defect part, based on the calibration curve created beforehand in the storage 55 (Step S4).

The calibration curve and the method of calculating the crack depth using the calibration curve are described below. The calibration curve refers to a graph curve representing the relationship between the crack depth in the depth direction and the scattering signal intensity. That is, once the scattering signal intensity is obtained, the crack depth corresponding to the value of the scattering signal intensity is obtained.

The calibration curve can be created as follows: Talbot imaging is performed on glass plates having grooves of different known depths, or Talbot imaging is performed on pieces of a brittle material having different thicknesses and arranged so as to align on their lateral sides to obtain the scattered signal intensities at the connection portions between the pieces of the brittle material; and the scattered signal intensities corresponding to the groove depths are obtained.

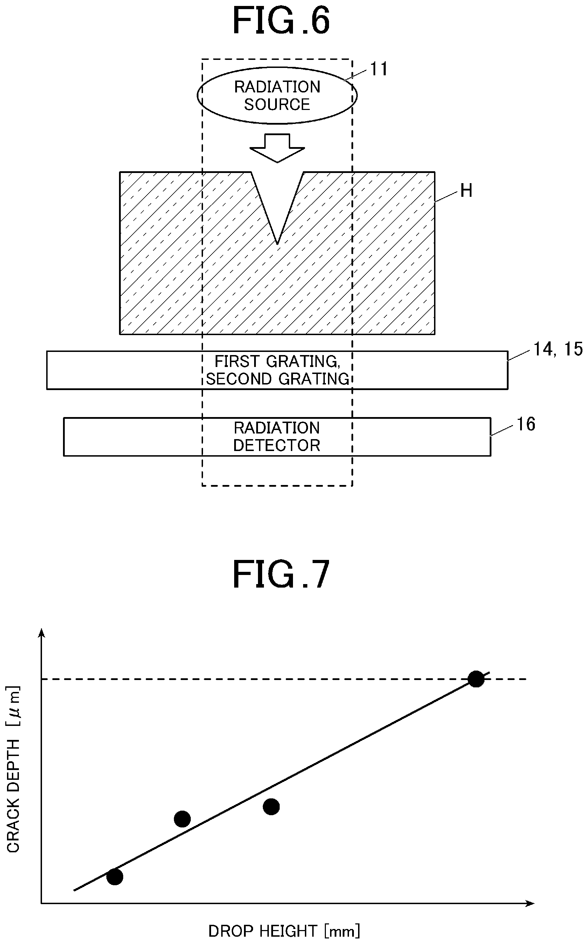

As a premise, the evaluation target H is a brittle material having a high transmittance (I/Io) of electromagnetic waves including light. Therefore, the scattering signal intensity includes only information on cracks, as shown in FIG. 6, and a calibration curve can be created. On the other hand, for example, in the case of the CFRP as shown in FIG. 10, the scattering signal intensity includes not only information on cracks but also information on fibers and voids. Therefore, the calibration curve cannot be created.

The connection portions mentioned above may not only be the glued portions between the glass plates or pieces of the brittle material arranged such that their edges are aligned but also the contacted portions between the glass plates or pieces of the brittle material arranged such that their edges are aligned.

Next, the control unit 51 causes the display 53 to display the drop height of the pen in the pen drop test and the crack depth of the defect part (Step S5). The control unit 51 then ends the crack depth calculation process A.

(Test result)

FIG. 7 is a graph in which crack depths and drop heights are plotted. The crack depths were obtained by performing the pen drop test of dropping a pen from three different heights and by performing the crack depth calculation process A of FIG. 5 three times. The solid straight line approximately shows the relationship between the crack depth and the drop height, based on the plotted points. For example, a straight line obtained by least square approximation may be used.

The broken line indicates the thickness of the evaluation target H. The drop height at the intersection of the solid line and the broken line is used as an index related to the impact resistance of the evaluation target H. Thus, the impact resistance performance can be quantitatively evaluated.

FIG. 11 shows results of a known test. In the known test, samples of the evaluation target H having different thicknesses are prepared; the samples are visually inspected whether the samples are cracked or not each time the drop height is changed; and thus the impact resistance performance of the evaluation target H is checked. According to the present evaluation method, the impact resistance performance can be evaluated by performing a test by a smaller number of times.

In the above description, the drop height at the intersection of the solid line and the broken line is used as an index related to the impact resistance of the evaluation target H. However, the index is not limited thereto.

For example, assume that multiple evaluation targets H are subjected to the pen drop test under the same conditions. In such a case, the crack depths obtained for the respective evaluation targets H are used as indexes. Thus, the strengths of the respective evaluation targets H can be relatively evaluated. The evaluation targets H can also be classified into strength grades that are determined based on crack depths as indexes.

Furthermore, an impact pressure applied to the evaluation target H when a pen hits the evaluation target H in the pen drop test may be used as an index related to impact resistance. To measure the impact pressure, a base layer, a pressure-sensitive paper, and the evaluation target H are arranged in this order on a surface plate; a pen drop test is performed in this state; and the discoloration of part of the pressure-sensitive paper where the pen was dropped is measured by a pressure image analysis system, for example. The base layer is made of a resin material, such as polyimide, acryl, or Bakelite, for example. The base layer may be an actual electronic device module to which the evaluation target H is attached as a cover.

(Other embodiments)

As another embodiment, the radiation source 11 may emit radiation rays having multiple wavelengths. Thus, the accuracy of crack depth calculation can be improved.

Furthermore, the scattering signal intensity obtained by imaging the angled evaluation target H may be used alone or used in combination to calculate the crack depth.

Furthermore, although the pen drop test is performed as an example in the first embodiment, a bending test (e.g., disclosed in Japanese Unexamined Patent Publication No. 2018-92770), a tensile test (e.g., disclosed in Japanese Unexamined Patent Publication No. 2020-187088), or the like may be performed. In the bending test, the number of times of bending indicates the impact resistance performance of the evaluation target H. In the tensile test, the load indicates the impact resistance performance of the evaluation target H.

Although the crack depth is calculated based on the scattering signal intensity of the small-angle scattering image in the first embodiment, the crack depth may be calculated based on the signal intensity of the differential phase image.

Specifically, the signal intensity of the differential phase image represents the refraction of X-rays in the evaluation target H, as described above, and the degree of the refraction of X-rays changes depending on the crack depth. Therefore, it is possible to prepare a calibration curve of the signal intensity of the differential phase image and the crack depth, based on the same method in the paragraph [0047]. That is, once the signal intensity of the differential phase image is obtained, the crack depth corresponding to the signal intensity of the differential phase image is obtained.

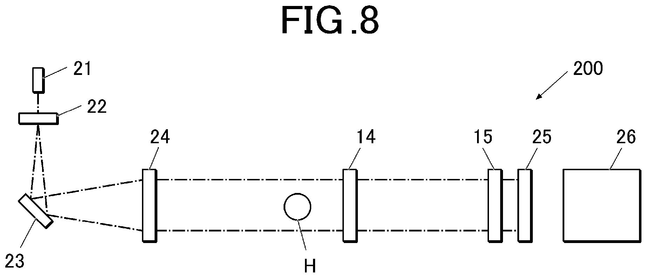

Furthermore, although the Talbot imaging using X-rays is performed as an example in the first embodiment, the small-angle scattering image and the differential phase image of the evaluation target H may be obtained by an optical Talbot device that does not use X-rays. For example, an Optical Talbot device 200 shown in FIG. 8 includes a laser 21, a biconcave lens 22, a mirror 23, a plano-convex lens 24, a first grating 14 (G1 grating), a second grating 15 (G2 grating), a screen 25, and a CCD (Charge -Coupled Device) camera 26.

The laser light is expanded by the biconcave lens 22, the mirror 23, and the plano-convex lens 24, and the evaluation target H is placed between the plano-convex lens 24 and the Talbot interferometer (the first grating 14, the second grating 15, the screen 25, and the CCD camera 26). Thus, the optical Talbot device 200 forms a moire fringe image including moire fringe disturbance on the screen 25 and obtains a small-angle scattering image and a differential phase image of the evaluation target H by processing the moire fringe image.

(Effects, etc)

As described above, the evaluation method for evaluating a brittle material uses a Talbot imaging apparatus (radiography apparatus 100). In the evaluation, the evaluation target H is a brittle material having a high transmittance (I/Io) of an electromagnetic wave including light and having a defect part. The method includes: imaging the evaluation target H to obtain a small-angle scattering image; obtaining a scattering signal intensity of the defect part from the small-angle scattering image; and calculating depth-direction information of the defect part from the scattering signal intensity. Therefore, the entire defect part in a brittle material having a high transmittance and the defect part can be quantitatively evaluated.

According to the evaluation method, the depth-direction information is calculated, based on a calibration curve of the scattering signal intensity and depth information of the defect part of the evaluation target H. Therefore, the entire defect part in a brittle material having a high transmittance and the defect part can be quantitatively and quickly evaluated. In a known test, the test has to be performed many times, as shown in the known test result in FIG. 11.

According to the evaluation method, an index related to an impact resistance of the evaluation target H is quantitatively calculated, based on the depth-direction information. Therefore, the entire defect part in a brittle material having a high transmittance and the defect part can be quantitatively evaluated.

The defect part in the evaluation target H is generated by a pen drop test. Therefore, the entire defect part of the evaluation target H subjected to a known testing method can be quantitatively evaluated.

The defect part of the evaluation target H is generated by a bending test. Therefore, the entire defect part of the evaluation target H subjected to a known testing method can be quantitatively evaluated.

It is preferable that the X-ray transmittance (I/Io) of the evaluation target H be in a range of 0.900 to 0.999 in a situation that the evaluation target H is imaged under conditions that the tube voltage is 50 kV and the radiation dose is 800 mAs. With such an evaluation target H, the entire defect part thereof can be appropriately evaluated.

Furthermore, an evaluation method uses a Talbot imaging apparatus (radiography apparatus 100). In the evaluation, the evaluation target H is a brittle material having a high transmittance (I/Io) of an electromagnetic wave including light and having a defect part. The method includes: imaging the evaluation target H to obtain a differential phase image; obtaining a signal intensity of the defect part from the differential phase image; and calculating depth-direction information of the defect part from the signal intensity. Therefore, the entire defect part in a brittle material having a high transmittance and the defect part can be quantitatively evaluated.

Furthermore, an evaluation apparatus (radiography apparatus 100) includes: an irradiation device (radiation source 11) that emits an electromagnetic wave including light; gratings (the multi-slit 12, the first grating 14, and the second grating 15); a detector (the radiation detector 16); a generation means (the control unit 51); and a calculation means (the control unit 51). The irradiation deice, the gratings, and the detector are arranged in an irradiation axis direction. The evaluation target H is a brittle material that has a high transmittance (I/Io) of the electromagnetic wave and that has a defect part, and the evaluation target H is placed at a position overlapping the irradiation axis direction. The irradiation device irradiates the evaluation target H to image the evaluation target H and obtain a moire fringe image(s). The generation means generates a small-angle scattering image, based on the obtained moire fringe image. The calculation means obtains a scattering signal intensity of the defect part from the small-angle scattering image and calculates depth-direction information of the defect part from the scattering signal intensity. Therefore, the entire defect part in a brittle material having a high transmittance and the defect part can be quantitatively evaluated.

Furthermore, the calculation means (control unit 51) calculates the depth-direction information, based on a calibration curve of the scattering signal intensity and depth information of the defect part of the evaluation target H. Therefore, the entire defect part in a brittle material having a high transmittance and the defect part can be quantitatively and quickly evaluated.

Furthermore, the calculation means (control unit 51) quantitatively calculates an index related to the impact resistance of the evaluation target H, based on the depth-direction information. Therefore, the entire defect part in a brittle material having a high transmittance and the defect part can be quantitatively evaluated.

Furthermore, a program is for a computer of an evaluation apparatus that includes an irradiation device (the radiation source 11) for emitting an electromagnetic wave including light, gratings (the multi-slit 12, the first grating 14, and the second grating 15), and a detector (the radiation detector 16). The irradiation device, the gratings, and the detector are arranged in an irradiation axis direction. The evaluation target H is a brittle material that has a high transmittance (I/Io) of the electromagnetic wave and has a defect part, and the evaluation target H is placed at a position overlapping the irradiation axis direction. The irradiation device irradiates the evaluation target to image the evaluation target H and obtain a moire fringe image(s). The evaluation apparatus evaluates the evaluation target H, based on the obtained moire fringe image. The program causes the computer to function as: a generation means (the control unit 51) that generates a small-angle scattering image, based on the moire fringe image; and a calculation means (the control unit 51) that obtains a scattering signal intensity of the defect part from the small-angle scattering image and calculates depth-direction information of the defect part from the scattering signal intensity. Therefore, the entire defect part in a brittle material having a high transmittance and the defect part can be quantitatively evaluated.

Although the first embodiment of the present invention and the modifications thereof have been described above, the above-described embodiments are preferred examples according to the present invention and do not limit the present invention.

For example, the entire defect part can be quantitatively evaluated by performing the same test as in the first embodiment of the present invention, obtaining the signal intensity of the defect part from the differential phase image, and calculating the depth-direction information of the defect part.

Furthermore, the evaluation apparatus in the above-described embodiment uses the Talbot-Lau interferometer that moves the second grating 15 with respect to the multi-slit 12 and the first grating 14 during imaging by the fringe scanning method, as an example. However, the present invention may be applied to an evaluation apparatus that uses a Talbot-Lau interferometer that moves one or two gratings among the multi-slit 12, the first grating 14, and the second grating 15 during imaging by the fringe scanning method. The present invention may be applied to an evaluation apparatus that uses a Talbot interferometer that moves either the first grating 14 or the second grating 15 with respect to the other grating. Furthermore, the present invention may be applied to an evaluation apparatus that uses a Lau interferometer that moves either the multi-slit 12 or the first grating 14 with respect to the other grating. Furthermore, the present invention may be applied to a Talbot-Lau interferometer, a Talbot interferometer, or a Lau interferometer that uses a Fourier transform method, which does not require fringe scanning.

Furthermore, in the above-described embodiment, the small-angle scattering image and the differential phase image are generated based on the moire fringe images obtained by the Talbot imaging, as an example. However, the present invention can be realized as long as the small-angle scattering image and/or the differential phase image are generated.

Furthermore, although a hard disk or a semiconductor nonvolatile memory is used as examples of a computer-readable medium for the program according to the present invention, the computer-readable storage medium is not limited to these examples. As other computer-readable recording media, portable recording media such as CD-ROMs can be applied. Furthermore, a carrier wave is also applied as a medium for providing data of the program according to the present invention via a communication line.

The detailed configuration and the detailed operation of the devices constituting the evaluation apparatus can also be appropriately modified without departing from the scope of the invention.

Industrial Applicability

The present disclosure can be used as an evaluation method, an evaluation apparatus, and a program.

Reference Signs List

100 Radiography apparatus (Talbot imaging apparatus, evaluation apparatus)
1 Main body
11 Radiation source
12 Multi-slit
13 Support base
14 First grating
15 Second grating
15a Moving mechanism
16 Radiation detector
17 Support column
17a Buffer member
111 Focal point
112 Additional filter-collimator
120 First cover unit
130 Second cover unit
19 Base stand

200 Optical Talbot apparatus
21 Laser
22 Biconcave lens
23 Mirror
24 Plano-convex lens
25 Screen
26 CCD camera
5 Controller
51 Control unit (generation means, calculation means)
52 Operation unit
53 Display
54 Communication unit
55 Storage

**Claims**

1. An evaluation method using a Talbot imaging apparatus,
   wherein in the evaluation, an evaluation target is a brittle material having a high transmittance (I/Io) of an electromagnetic wave including light and having a defect part, the method comprising:

   imaging the evaluation target to obtain a small-angle scattering image;
   obtaining a scattering signal intensity of the defect part from the small-angle scattering image; and
   calculating depth-direction information of the defect part from the scattering signal intensity.

2. The evaluation method according to claim 1, wherein the depth-direction information is calculated, based on a calibration curve of the scattering signal intensity and depth information of the defect part of the evaluation target.

3. The evaluation method according to claim 1, wherein an index related to an impact resistance of the evaluation target is calculated, based on the depth-direction information.

4. The evaluation method according to claim 1, wherein the defect part in the evaluation target is generated by a pen drop test.

5. The evaluation method according to claim 1, wherein the defect part of the evaluation target is generated by a bending test.

6. The evaluation method according to any one of claims 1 to 5, wherein an X-ray transmittance (I/Io) of the evaluation target is in a range of 0.900 to 0.999 in a situation that the evaluation target is imaged under conditions that a tube voltage is 50 kV and a radiation dose is 800 mAs.

7. An evaluation method using a Talbot imaging apparatus,
   wherein in the evaluation, an evaluation target is a brittle material having a high transmittance (I/Io) of an electromagnetic wave including light and having a defect part, the method comprising:

   imaging the evaluation target to obtain a differential phase image;
   obtaining a signal intensity of the defect part from the differential phase image; and
   calculating depth-direction information of the defect part from the signal intensity.

8. An evaluation apparatus comprising:

   an irradiation device that emits an electromagnetic wave including light;
   gratings;
   a detector;
   a generation means; and
   a calculation means,
   wherein the irradiation device, the gratings, and the detector are arranged in an irradiation axis direction,
   wherein an evaluation target is a brittle material that has a high transmittance (I/Io) of the electromagnetic wave and that has a defect part, and the evaluation target is placed at a position overlapping the irradiation axis direction,
   wherein the irradiation device irradiates the evaluation target to image the evaluation target and obtain a moire fringe image,
   wherein the generation means generates a small-angle scattering image, based on the obtained moire fringe image,
   wherein the calculation means obtains a scattering signal intensity of the defect part from the small-angle scattering image and calculates depth-direction information of the defect part from the scattering signal intensity.

9. The evaluation apparatus according to claim 8, wherein the calculation means calculates the depth-direction information, based on a calibration curve of the scattering signal intensity and depth information of the defect part of the evaluation target.

10. The evaluation apparatus according to claim 8, wherein the calculation means calculates an index related to an impact resistance of the evaluation target, based on the depth-direction information.

11. A program for a computer of an evaluation apparatus that includes an irradiation device for emitting an electromagnetic wave including light, gratings, and a detector,

wherein the irradiation device, the gratings, and the detector are arranged in an irradiation axis direction,

wherein an evaluation target is a brittle material that has a high transmittance ($I/I_o$) of the electromagnetic wave and has a defect part, and the evaluation target is placed at a position overlapping the irradiation axis direction,

wherein the irradiation device irradiates the evaluation target to image the evaluation target and obtain a moire fringe image,

wherein the evaluation apparatus evaluates the evaluation target, based on the obtained moire fringe image,

wherein the program causes the computer to function as:

> a generation means that generates a small-angle scattering image, based on the moire fringe image; and
> a calculation means that obtains a scattering signal intensity of the defect part from the small-angle scattering image and calculates depth-direction information of the defect part from the scattering signal intensity.

# FIG.1

# FIG.2

# FIG.3

# FIG.4

# FIG.5

START

OBTAIN TEST CONDITIONS — S1

PERFORM TALBOT IMAGING AND GENERATE RECONSTRUCTED IMAGE — S2

EXTRACT SCATTERING SIGNAL INTENSITY OF DEFECT PART — S3

CALCULATE CRACK DEPTH OF DEFECT PART — S4

DISPLAY PROCESSING RESULT — S5

END

# FIG.6

RADIATION SOURCE ——11

H

FIRST GRATING, SECOND GRATING ——14, 15

RADIATION DETECTOR ——16

# FIG.7

CRACK DEPTH [μm]

DROP HEIGHT [mm]

# FIG.8

# FIG.9

(a)

TALBOT IMAGE
(SMALL-ANGLE SCATTERING IMAGE)

(b)

2000.00 $\mu$m

MICROSCOPE IMAGE
(20 MAGNIFICATIONS)

# FIG.10

| | FIRST GRATING, SECOND GRATING | 14, 15 |
| | RADIATION DETECTOR | 16 |

# FIG.11

| | DROP HEIGHT [mm] | | | | | | | | | |
|---|---|---|---|---|---|---|---|---|---|---|
| | 5 | 10 | 15 | 20 | 25 | 30 | 35 | 40 | 45 | 50 |
| SAMPLE 1 | ○ | ○ | ○ | ○ | ○ | ○ | × | — | — | — |
| SAMPLE 2 | ○ | ○ | ○ | × | — | — | — | — | — | — |
| SAMPLE 3 | ○ | ○ | ○ | ○ | ○ | ○ | ○ | ○ | ○ | × |
| SAMPLE 4 | ○ | ○ | × | — | — | — | — | — | — | — |
| SAMPLE 5 | × | — | — | — | — | — | — | — | — | — |

○ : NOT CRACKED, × : CRACKED

## INTERNATIONAL SEARCH REPORT

| International application No. |
| --- |
| **PCT/JP2023/008907** |

**A. CLASSIFICATION OF SUBJECT MATTER**

*G01N 3/303*(2006.01)i; *G01N 23/041*(2018.01)i; *G01N 23/18*(2018.01)i; *G01N 23/201*(2018.01)i
FI: G01N23/041; G01N3/303 D; G01N23/18; G01N23/201

According to International Patent Classification (IPC) or to both national classification and IPC

**B. FIELDS SEARCHED**

Minimum documentation searched (classification system followed by classification symbols)

G01N23/00-G01N23/2276, G01N3/00-G01N3/62, G01B15/00-G01B15/08, A61B6/00-A61B6/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580/JSTChina (JDreamIII), Scitation, SPIE Digital Library, Science Direct

**C. DOCUMENTS CONSIDERED TO BE RELEVANT**

| Category* | Citation of document, with indication, where appropriate, of the relevant passages | Relevant to claim No. |
| --- | --- | --- |
| X | WO 2020/246220 A1 (KONICA MINOLTA INC) 10 December 2020 (2020-12-10) paragraphs [0030]-[0036], [0042]-[0044], [0051]-[0052], [0063]-[0069], [0082], fig. 1-13 | 1, 3-8, 10-11 |
| A | | 2, 9 |
| X | WO 2019/130728 A1 (SHIMADZU CORP) 04 July 2019 (2019-07-04) paragraphs [0027]-[0054], fig. 1-3 | 1, 3-8, 10-11 |
| A | | 2, 9 |
| A | WO 2019/066051 A1 (TOHOKU UNIVERISITY) 04 April 2019 (2019-04-04) | 1-11 |
| A | JP 2015-043931 A (KONICA MINOLTA INC) 12 March 2015 (2015-03-12) | 1-11 |
| A | JP 2018-179940 A (SHIMADZU CORP) 15 November 2018 (2018-11-15) | 1-11 |
| A | JP 2012-135612 A (FUJIFILM CORP) 19 July 2012 (2012-07-19) | 1-11 |
| A | JP 2002-162705 A (KONICA CORP) 07 June 2002 (2002-06-07) | 1-11 |

☑ Further documents are listed in the continuation of Box C.     ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **15 May 2023** | **30 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2023/008907** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2013/0108015 A1 (CSEM CENTRE SUISSE D'ELECTRONIQUE ET) 12 May 2013 (2013-05-12) | 1-11 |
| A | JP 2012-143549 A (FUJIFILM CORP) 02 August 2012 (2012-08-02) | 1-11 |
| A | WO 2012/042924 A1 (KONICA MINOLTA INC) 05 April 2012 (2012-04-05) | 1-11 |
| A | WO 2011/114845 A1 (KONICA MINOLTA INC) 22 September 2011 (2011-09-22) | 1-11 |
| A | WO 2012/128335 A1 (KONICA MINOLTA INC) 27 September 2012 (2012-09-27) | 1-11 |
| A | JP 2012-170618 A (KONICA MINOLTA MEDICAL & GRAPHIC INC) 10 September 2012 (2012-09-10) | 1-11 |
| A | JP 2015-013051 A (KONICA MINOLTA INC) 22 January 2015 (2015-01-22) | 1-11 |
| A | WO 2012/029340 A1 (KONICA MINOLTA INC) 08 March 2012 (2012-03-08) | 1-11 |

Form PCT/ISA/210 (second sheet) (January 2015)

INTERNATIONAL SEARCH REPORT
Information on patent family members

International application No.

**PCT/JP2023/008907**

| Patent document cited in search report | | | Publication date (day/month/year) | Patent family member(s) | | | Publication date (day/month/year) |
|---|---|---|---|---|---|---|---|
| WO | 2020/246220 | A1 | 10 December 2020 | (Family: none) | | | |
| WO | 2019/130728 | A1 | 04 July 2019 | US paragraphs [0037]-[0066], fig. 1-3 CN | 2020/0205761 110868932 | A1 A | |
| WO | 2019/066051 | A1 | 04 April 2019 | (Family: none) | | | |
| JP | 2015-043931 | A | 12 March 2015 | (Family: none) | | | |
| JP | 2018-179940 | A | 15 November 2018 | US EP CN | 2018/0306735 3395253 108720855 | A1 A1 A | |
| JP | 2012-135612 | A | 19 July 2012 | US CN | 2012/0140886 102525519 | A1 A | |
| JP | 2002-162705 | A | 07 June 2002 | (Family: none) | | | |
| US | 2013/0108015 | A1 | 12 May 2013 | US EP | 2016/0377559 2586373 | A1 A1 | |
| JP | 2012-143549 | A | 02 August 2012 | US CN | 2012/0155610 102551769 | A1 A | |
| WO | 2012/042924 | A1 | 05 April 2012 | US | 8995614 | B2 | |
| WO | 2011/114845 | A1 | 22 September 2011 | US | 2013/0011040 | A1 | |
| WO | 2012/128335 | A1 | 27 September 2012 | US | 2014/0010344 | A1 | |
| JP | 2012-170618 | A | 10 September 2012 | (Family: none) | | | |
| JP | 2015-013051 | A | 22 January 2015 | (Family: none) | | | |
| WO | 2012/029340 | A1 | 08 March 2012 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020187088 A
- WO 2020537185 A
- JP 2018092770 A